# EUROPEAN PATENT APPLICATION

(11) **EP 4 660 474 A1**
(43) Date of publication of application: **10.12.2025**
(21) Application number: 23928503.4
(22) Date of filing: 17.03.2023
(51) Int. Cl.: F16D 28/00, F16D 23/12

(54) **CLUTCH CONTROL DEVICE**

(71) Applicant: HONDA MOTOR CO., LTD., Tokyo 105-8404 (JP)
(72) Inventor: ONO, Junya, Tokyo 107-8556 (JP); KUDO, Takashi, Tokyo 107-8556 (JP); FUJIMOTO, Yasushi, Tokyo 107-8556 (JP)
(74) Representative: Kiwit, Benedikt
(86) International application number: PCT/JP2023/010565
(87) International publication number: WO 2024/194918

(57) **Abstract**

A clutch control device (50) includes a release mechanism (51, 151) which actuates a clutch device (40). The release mechanism (51, 151) includes: a control-side release shaft (56) which is supported by a clutch actuator (60), and which receives an input from a motor (61), and then rotates; a clutch-side release shaft group (57, 157) including a plurality of clutch-side release shafts (57A, 57B, 57C, 157A, 157B), which receive rotation of the control-side release shaft (56), and then rotate integrally, the clutch-side release shaft group (57, 157) being detachably engaged with the control-side release shaft (56); and a lifter shaft (52) which actuates the clutch device (40) in accordance with the rotation of the clutch-side release shaft group (57, 157). The plurality of clutch-side release shafts (57A, 57B, 57C, 157A, 157B) are disposed with central axes shifted from each other.

## Description

### TECHNICAL FIELD

The present invention relates to a clutch control device.

### BACKGROUND ART

A clutch control device has been conventionally known, including a clutch device and a clutch actuator that outputs driving force for actuating the clutch device, and automatically performing a connection and disconnection operation of the clutch device with electric control (see, for example, Patent Document 1). Patent Document 1 discloses a constitution in which a clutch actuator motor, which is a driving force source of a switching operation for connecting and disconnecting the clutch, is housed in a first motor case and is attached to an outer surface in a vehicle width direction of a sprocket cover.

### Citation List

### Patent Document

Patent Document 1: Japanese Patent No. 6578833

### SUMMARY OF INVENTION

### Technical Problem

In order to make compact the entirety of the power unit to which the clutch control device is attached, by the way, there is a demand for disposing the clutch actuator in close proximity to a push rod of the clutch. On the other hand, depending on the vehicle type, the clutch actuator may hit a driver's leg, and the driver may feel annoyed. In particular, with regard to the clutch actuator, the periphery of the motor easily gets thick, and thus easily hits the driver's leg. Therefore, in the conventional clutch control device, there is room for improvement in a degree of freedom in the arrangement of the clutch actuator.

The present invention provides a clutch control device capable of improving a degree of freedom in the arrangement of a clutch actuator. Furthermore, an object of the present application is to improve operability by enabling the clutch actuator to be disposed compactly. In addition, such an object further improves traffic safety and contributes to development of a sustainable transportation system, accordingly.

### Solution to Problem

A clutch control device according to a first aspect of the present invention includes: a clutch actuator (60) including a motor (61) which outputs driving force for actuating a clutch device (40); a clutch operation element on which a clutch operation is performed by an occupant; and a release mechanism (51, 151) which receives an input from at least one of the clutch actuator (60) and the clutch operation element, and then actuates the clutch device (40), in which the release mechanism (51, 151) includes: a control-side release shaft (56) which is supported by the clutch actuator (60) and which receives an input from the motor (61), and then rotates; a clutch-side release shaft group (57, 157) including a plurality of clutch-side release shafts (57A, 57B, 57C, 157A, 157B) which receive rotation of the control-side release shaft (56), and then rotate integrally, the clutch-side release shaft group (57, 157) being detachably engaged with the control-side release shaft (56); and a lifter shaft (52) which extends in an axial direction, which is engaged with a first clutch-side release shaft (57A, 157A) of the plurality of clutch-side release shafts (57A, 57B, 57C, 157A, 157B) and which is displaced in the axial direction by rotation of the clutch-side release shaft group (57, 157) to actuate the clutch device (40), and the plurality of clutch-side release shafts (57A, 57B, 57C, 157A, 157B) are disposed with central axes shifted from each other.

According to the first aspect, by adjusting the arrangement of the clutch-side release shaft group including the clutch-side release shaft engaged with the control-side release shaft, it becomes possible to optionally set the position of the clutch actuator including the control-side release shaft with respect to the lifter shaft. Therefore, the degree of freedom in the arrangement of the clutch actuator can be improved.

As for the clutch control device according to a second aspect of the present invention, in the clutch control device according to the above first aspect, the release mechanism (151) may include a manual-side release shaft (155) which is detachably engaged with the clutch-side release shaft group (157) and which receives a force of the operation by a driver and then rotates, the plurality of clutch-side release shafts (157A, 157B) may individually receive rotation of the manual-side release shaft (155) and rotation of the control-side release shaft (156) and then rotate integrally, and the release mechanism (151) may include a reduction gear train (181) which decelerates the rotation of the manual-side release shaft (155) and transmits the rotation to the first clutch-side release shaft (157A).

According to the second aspect, when actuating the clutch device, an operation load by the driver applied to the manual-side release shaft can be reduced.

As for the clutch control device according to a third aspect of the present invention, in the clutch control device according to the above first aspect, the release mechanism (51) may include a manual-side release shaft (55) which is detachably engaged with the clutch-side release shaft group (57) and receives a force of the operation by a driver, and then rotates, the plurality of clutch-side release shafts (57A, 57B, 57C) may individually receive rotation of the manual-side release shaft (55) and rotation of the control-side release shaft (56), and then rotate integrally, and the manual-side release shaft (55) may be disposed to be coaxial with the first clutch-side release shaft (57A), and is directly engaged with the first clutch-side release shaft (57A).

According to the third aspect, since the manual-side release shaft is directly coupled to the first clutch-side release shaft without the intervention of a gear or the like, the driver is able to rotate the manual-side release shaft with a direct operation feeling when actuating the clutch device. Therefore, the operability of the manual connection and disconnection operation of the clutch device can be improved.

As for the clutch control device according to a fourth aspect of the present invention, in the clutch control device according to one of the above first to third aspects, the clutch-side release shaft group (57) may further include: a second clutch-side release shaft (57B) which is engaged with the control-side release shaft (56); and a third clutch-side release shaft (57C) which transmits rotation of the second clutch-side release shaft (57B) to the first clutch-side release shaft (57A).

According to the fourth aspect, the clutch actuator including the control-side release shaft can be disposed at a position farther away from the lifter shaft, as compared with a constitution in which the clutch-side release shaft group includes only two clutch-side release shafts. Therefore, the degree of freedom in the arrangement of the clutch actuator can be further improved.

As for the clutch control device according to a fifth aspect of the present invention, in the clutch control device according to one of the above first to fourth aspects, a shaft holding member (82, 182) which is disposed outside the clutch actuator (60) and which holds at least one clutch-side release shaft other than the first clutch-side release shaft (57A, 157A) in the clutch-side release shaft group (57, 157); and a shaft cover portion (30) which covers the first clutch-side release shaft (57A, 157A) may be further included.

According to the fifth aspect, since the shaft holding member is disposed integrally with the clutch-side release shaft group outside the clutch actuator, the shaft holding member is also covered with the shaft cover portion that covers the first clutch-side release shaft. This enables the shaft holding member to be collectively sealed together with the first clutch-side release shaft, thereby eliminating the need for an oil seal structure, so that an increase in the number of components can be minimized. Advantageous Effects of Invention

According to the above clutch control device, the degree of freedom in the arrangement of the clutch actuator can be improved.

### BRIEF DESCRIPTION OF DRAWINGS

[FIG. 1] A right side view of a motorcycle according to one embodiment.
[FIG. 2] A cross-sectional view illustrating a part of a power unit according to one embodiment.
[FIG. 3] A cross-sectional view illustrating a clutch control device according to a first embodiment.
[FIG. 4] A perspective view illustrating a shaft holding member according to the first embodiment.
[FIG. 5] A block diagram of a transmission system according to the first embodiment.
[FIG. 6] An explanatory diagram illustrating transition of a clutch control mode of the motorcycle according to the first embodiment.
[FIG. 7] A cross-sectional view illustrating a clutch control device according to a second embodiment.
[FIG. 8] A perspective view illustrating a shaft holding member according to the second embodiment.

### DESCRIPTION OF EMBODIMENTS

Hereinafter, embodiments of the present invention will be described with reference to the drawings. Note that in the following description, constitutions having the same or similar functions are denoted by the same reference numbers. In addition, redundant descriptions of these constitutions will be omitted, in some cases. In addition, in the following description, directions such as front, rear, up, down, left, and right coincide with directions with respect to a vehicle to be described below. That is, an up-down direction coincides with a vertical direction, and a left-right direction coincides with a vehicle width direction. Further, in the drawings to be used in the following description, an arrow UP indicates upward, an arrow FR indicates forward, and an arrow LH indicates leftward.

### <Entire Vehicle>

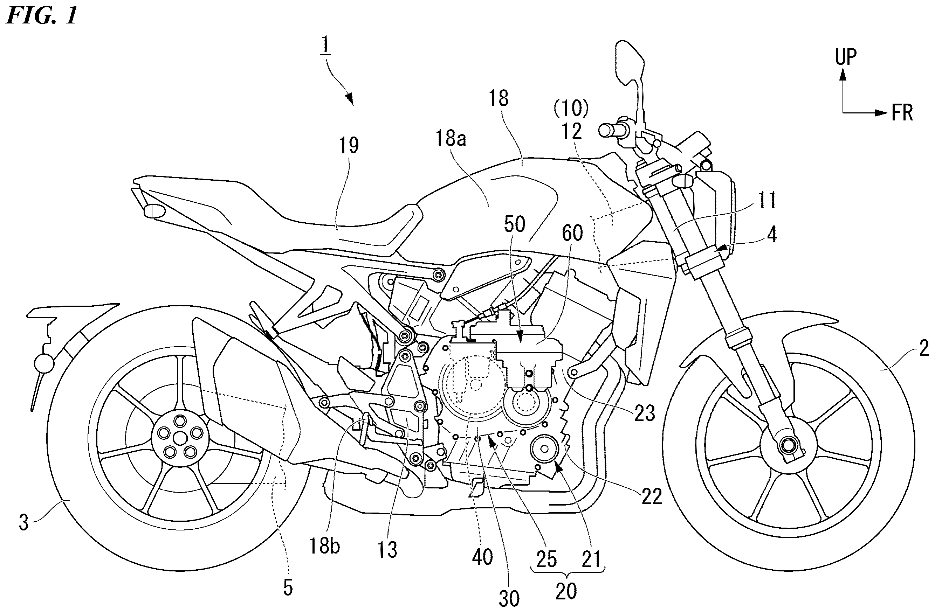

FIG. 1 is a right side view of a motorcycle according to one embodiment.

As illustrated in FIG. 1, a motorcycle 1 according to the present embodiment is a saddle-ride vehicle. The motorcycle 1 includes a front wheel 2, a rear wheel 3, a vehicle body frame 10, a power unit 20, and a clutch control device 50.

The vehicle body frame 10 includes a head pipe 11, a main frame 12, a pivot frame 13, and the like, which are integrally coupled together by welding or the like. The head pipe 11 is provided at a front end of the vehicle body frame 10. The head pipe 11 supports a steering stem of a front wheel suspension device 4. The front wheel 2 is supported by the front wheel suspension device 4. The main frame 12 extends rearward and downward from the head pipe 11. The pivot frame 13 extends downward from a rear end portion of the main frame 12. A front end portion of a swing arm 5 is swingably supported by a lower portion of the pivot frame 13. The rear wheel 3 is supported at a rear end portion of the swing arm 5. Note that the vehicle body frame 10 is not limited to the above constitution.

A fuel tank 18 is supported on the top of the main frame 12. A seat 19 is disposed on a rear side of the fuel tank 18. A knee grip portion 18a, which is recessed inward in a vehicle width direction, is formed at a rear portion of the fuel tank 18. The knee grip portions 18a are formed on both left and right sides of the fuel tank 18. The knee grip portions 18a are formed to be located inside the periphery of the left and right knees of the driver who is seated on the seat 19. A step 18b is disposed below the seat 19. On the step 18b, the driver places his/her foot.

The power unit 20 is supported by the vehicle body frame 10 so as not to be relatively displaced. The power unit 20 integrally includes an engine 21, a transmission 25, and a clutch device 40. The engine 21 is provided at a front portion of the power unit 20. The transmission 25 is provided at a rear portion of the power unit 20.

The engine 21 includes: a crankshaft extending in the vehicle width direction; a crankcase 22, which accommodates the crankshaft; and a cylinder 23, which stands forward and upward from the crankcase 22. The crankcase 22 is disposed below the main frame 12 in a side view. The cylinder 23 is integrally coupled to the crankcase 22. A piston is fitted in the cylinder 23. The reciprocating motion of the piston is converted into rotational motion of the crankshaft via a connecting rod. The crankcase 22 is made of metal.

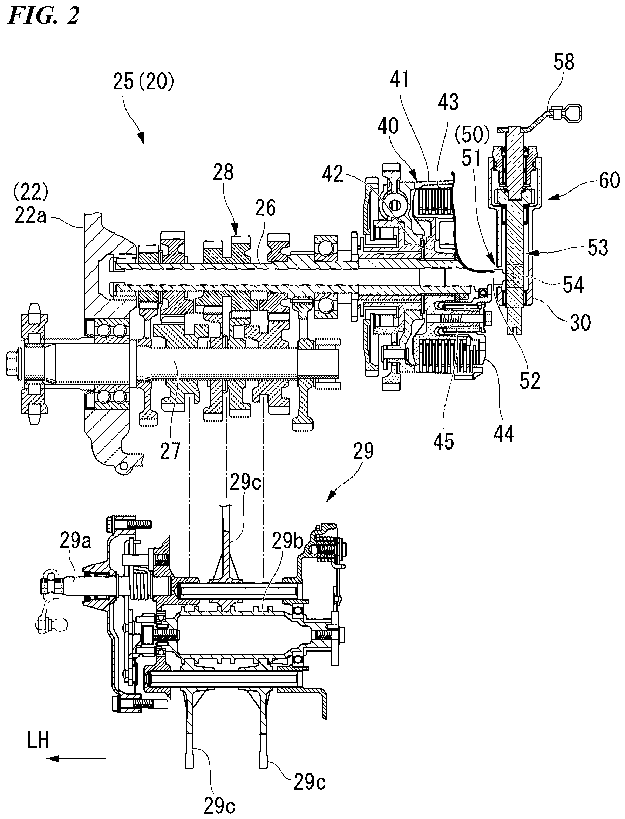

FIG. 2 is a cross-sectional view illustrating a part of a power unit according to one embodiment.

As illustrated in FIG. 2, the transmission 25 is accommodated in a rear portion of the crankcase 22. The rear portion of the crankcase 22 also serves as a transmission case 22a, which accommodates the transmission 25. The transmission 25 is a stepped transmission including: a main shaft 26 and a counter shaft 27, which are rotatably supported by the transmission case 22a; a shift gear group 28, which extends over the main shaft 26 and the counter shaft 27; and a change mechanism 29, which switches a gear pair used for power transmission between the main shaft 26 and the counter shaft 27 in the shift gear group 28. The main shaft 26 and the counter shaft 27 each extend in the vehicle width direction. The counter shaft 27 constitutes an output shaft of the power unit 20. The counter shaft 27 protrudes to the left side of the transmission case 22a, and is coupled to a drive sprocket. The rotation of the counter shaft 27 is transmitted from the left side of the transmission case 22a to the rear wheel 3 through a chain drive type of power transmission mechanism.

The main shaft 26 and the counter shaft 27 are disposed to be aligned in a front-rear direction on a rear side of the crankshaft. The clutch device 40 is coupled to a right end portion of the main shaft 26. The rotational power of the crankshaft is transmitted to the main shaft 26 through the clutch device 40, and is transmitted from the main shaft 26 to the counter shaft 27 through an optional gear pair of the shift gear group 28.

The change mechanism 29 is accommodated in the transmission case 22a. The change mechanism 29 includes a shift drum 29b, which has a hollow cylindrical shape, and which is parallel to the main shaft 26 and the counter shaft 27. The change mechanism 29 actuates a plurality of shift forks 29c with the rotation of the shift drum 29b. The shift fork 29c is actuated in accordance with a pattern of lead grooves formed on an outer circumference of the shift drum 29b. The change mechanism 29 switches a gear pair used for transmitting dynamic power between the main shaft 26 and the counter shaft 27 in the shift gear group 28 in accordance with the actuation of the shift fork 29c.

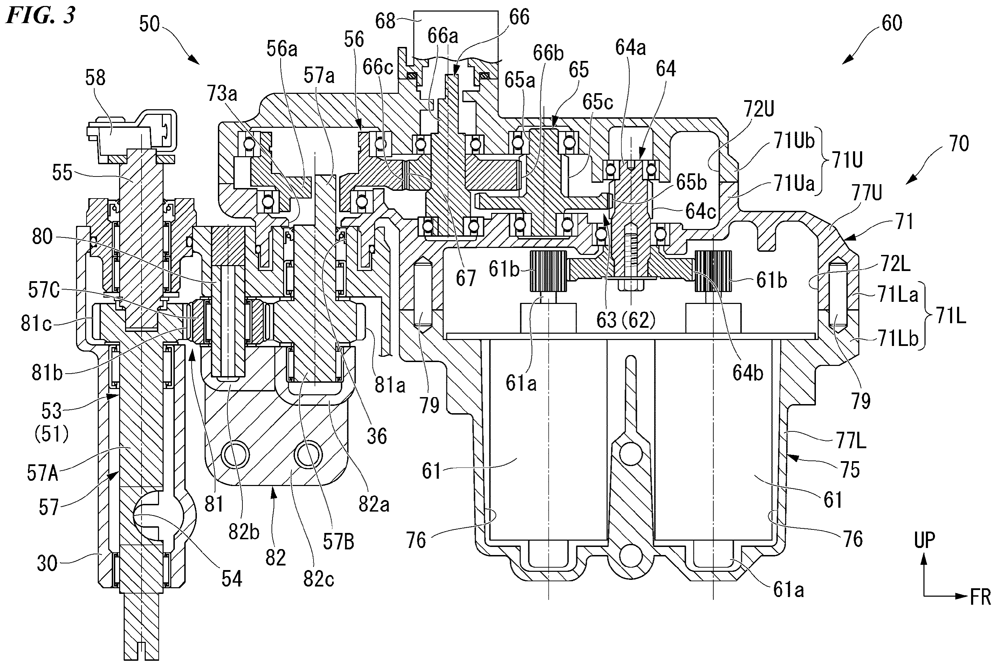

A clutch cover 30 is coupled to the transmission case 22a. The clutch cover 30 is disposed on the right side of the transmission case 22a, and is coupled to the crankcase 22. The clutch cover 30 is disposed on an extension of the main shaft 26. The clutch cover 30 defines a clutch chamber between the clutch cover 30 and the right crankcase 22. A shaft insertion portion 36 through which a release shaft 53 is inserted is formed on the clutch cover 30 (see FIG. 3).

The clutch device 40 is a multiple disc friction clutch that connects and disconnects power transmission between the crankshaft of the engine 21 and the main shaft 26 of the transmission 25. The clutch device 40 is disposed in a clutch chamber between the clutch cover 30 and the crankcase 22.

The clutch device 40 is a wet multi-plate clutch in which a plurality of clutch plates 43 are stacked in an axial direction. The clutch device 40 includes: a clutch outer 41; a clutch center 42; and the plurality of clutch plates 43.

The clutch outer 41 is driven by the rotational power transmitted from the crankshaft all the time. The clutch center 42 is disposed in the clutch outer 41, and is integrally and rotatably supported by the main shaft 26. The plurality of clutch plates 43 are stacked between the clutch outer 41 and the clutch center 42. The plurality of clutch plates 43 are frictionally engaged with the clutch outer 41 and the clutch center 42.

A pressure plate 44 having substantially the same diameter as those of the clutch plates 43 is disposed on the right side (an outer side in the vehicle width direction) of the clutch plates 43 that are stacked. The pressure plate 44 receives a resilient load of a clutch spring 45, is biased leftward, and brings the clutch plates 43 that are stacked into pressure contact with each other (frictional engagement). Accordingly, the clutch device 40 is brought into a connection state to be capable of transmitting the dynamic power. The clutch device 40 is a normally closed clutch that is in a connection state in a normal state with no external input.

The pressure contact (the frictional engagement) between the clutch plates 43 is released by the actuation of a release mechanism 51 inside the clutch cover 30. The release mechanism 51 is actuated by at least one of operation on a clutch lever (a clutch operation element) by an occupant, and application of torque by a clutch actuator 60.

### (First Embodiment)

The clutch control device 50 according to the first embodiment includes: the release mechanism 51; and the clutch actuator 60, which outputs driving force for actuating the clutch device 40. The release mechanism 51 includes: a lifter shaft 52; and the release shaft 53.

The lifter shaft 52 has a central axis along the vehicle width direction. The lifter shaft 52 is held in a right side portion of the main shaft 26 and is capable of reciprocating in the vehicle width direction. The release shaft 53 is disposed to be rotatable with respect to the clutch cover 30.

FIG. 3 is a cross-sectional view illustrating the clutch control device according to the first embodiment. Note that FIG. 3 illustrates a cut section including the rotation axis of each rotation body included in the clutch actuator 60.

As illustrated in FIG. 3, the release shaft 53 is divided into a plurality of elements to be rotatable by individually receiving an input from the clutch actuator 60 and an input of an operation by the occupant. Each of the plurality of elements of the release shaft 53 that have been divided has a central axis along a direction orthogonal to the vehicle width direction and is disposed in parallel to each other. In the following description, the axial direction of the release shaft will be simply referred to as an axial direction, unless otherwise specified. In addition, a direction around the axis along the axial direction will be referred to as a circumferential direction.

The release shaft 53 includes: a manual-side release shaft 55, which receives the force of the operation by the driver, and then rotates; a control-side release shaft 56, which receives an input from a motor 61 of the clutch actuator 60, and then rotates; and a clutch-side release shaft group 57 including a plurality of clutch-side release shafts 57A to 57C, which individually receive rotation of the manual-side release shaft 55 and rotation of the control-side release shaft 56, and then rotate integrally. That is, the clutch-side release shaft group 57 rotates integrally in each case of receiving the rotation of the manual-side release shaft 55 solely and receiving the rotation of the control-side release shaft 56 solely.

The manual-side release shaft 55 has a cylindrical shape. A lower portion of the manual-side release shaft 55 is located inside the clutch cover 30. The manual-side release shaft 55 is rotatably supported by the clutch cover 30. An upper end portion of the manual-side release shaft 55 protrudes outward from the clutch cover 30. A driven clutch lever 58 is rotatably supported integrally on an upper end portion of the manual-side release shaft 55. The driven clutch lever 58 is coupled to the clutch lever through an operation cable. Accordingly, the manual-side release shaft 55 receives the force of the operation by the driver via the clutch lever or the like and then rotates. A return spring is attached to the driven clutch lever 58. The return spring applies, to the driven clutch lever 58, biasing force in a direction opposite to the rotation (rotation in a clutch disconnection direction) in accordance with the operation on the clutch lever.

The control-side release shaft 56 has a cylindrical shape. The control-side release shaft 56 is located inside the unit case 70 of the clutch actuator 60. The control-side release shaft 56 is rotatably supported by the unit case 70. A control-side engaged portion 56a, which extends in the axial direction, is provided on the control-side release shaft 56. The control-side engaged portion 56a is formed in a fan shape in cross-section.

The clutch-side release shaft group 57 includes the plurality of clutch-side release shafts 57A to 57C, which are disposed to be rotatable with respect to the clutch cover 30. The plurality of clutch-side release shafts 57A to 57C include a first clutch-side release shaft 57A, a second clutch-side release shaft 57B, and a third clutch-side release shaft 57C.

The first clutch-side release shaft 57A has a cylindrical shape. The first clutch-side release shaft 57A is located inside the clutch cover 30 and is covered with the clutch cover 30. The first clutch-side release shaft 57A is rotatably supported by the clutch cover 30. The first clutch-side release shaft 57A is disposed to be coaxial with the manual-side release shaft 55.

An eccentric cam portion 54 is formed in a lower portion of the first clutch-side release shaft 57A. The eccentric cam portion 54 is engaged with a right end portion of the lifter shaft 52 (see FIG. 2). As illustrated in FIG. 2, the first clutch-side release shaft 57A rotates about its central axis to move the lifter shaft 52 rightward by the operation of the eccentric cam portion 54. The lifter shaft 52 is capable of reciprocating integrally with the pressure plate 44 of the clutch device 40. Therefore, when the lifter shaft 52 moves rightward, the pressure plate 44 moves rightward against the biasing force of the clutch spring 45. This releases the frictional engagement between the clutch plates 43 that are stacked. This brings the clutch device 40, which is a normally closed clutch, into a disconnection state in which the dynamic power cannot be transmitted. A lower return spring is attached to a lower end portion of the first clutch-side release shaft 57A. The lower return spring applies, to the first clutch-side release shaft 57A, biasing force in a direction opposite to the rotation in a clutch disconnection direction.

As illustrated in FIG. 3, an upper portion of the first clutch-side release shaft 57A overlaps a lower portion of the manual-side release shaft 55 in the axial direction and faces the lower portion of the manual-side release shaft 55 in the circumferential direction. The first clutch-side release shaft 57A is directly engaged with the manual-side release shaft 55 without the intervention of a transmission mechanism such as a gear and is integrally rotatable on an identical phase. That is, the first clutch-side release shaft 57A receives the rotation of the manual-side release shaft 55 and then rotates. In addition, when there is an input into the first clutch-side release shaft 57A without the intervention of the manual-side release shaft 55, the first clutch-side release shaft 57A is capable of rotating independently within a predetermined range from the manual-side release shaft 55.

The second clutch-side release shaft 57B is disposed in parallel with the first clutch-side release shaft 57A with its central axis shifted. The second clutch-side release shaft 57B is disposed on a front side relative to the first clutch-side release shaft 57A. The second clutch-side release shaft 57B is disposed to be coaxial with the control-side release shaft 56. A lower portion of the second clutch-side release shaft 57B is located inside the clutch cover 30 and is covered with the clutch cover 30. The second clutch-side release shaft 57B is rotatably supported by the clutch cover 30.

An upper portion of the second clutch-side release shaft 57B protrudes outward from the clutch cover 30 through the shaft insertion portion 36 of the clutch cover 30. The upper portion of the second clutch-side release shaft 57B faces the inside of the gear case 71 of the clutch actuator 60. An engaging portion 57a, which extends in the axial direction, is provided at an upper end portion of the second clutch-side release shaft 57B. The engaging portion 57a is formed in a fan shape in cross-section. The engaging portion 57a overlaps the control-side engaged portion 56a of the control-side release shaft 56 in the axial direction and faces the control-side engaged portion 56a in the circumferential direction. The second clutch-side release shaft 57B is directly engaged with the control-side release shaft 56 without the intervention of a transmission mechanism such as a gear and is integrally rotatable on an identical phase. That is, the second clutch-side release shaft 57B receives the rotation of the control-side release shaft 56 and then rotates. In addition, the engaging portion 57a is spaced apart from the control-side engaged portion 56a in the circumferential direction. When there is an input into the second clutch-side release shaft 57B without the intervention of the control-side release shaft 56, the second clutch-side release shaft 57B is capable of rotating independently within a predetermined range from the control-side release shaft 56.

The third clutch-side release shaft 57C is disposed between the second clutch-side release shaft 57B and the first clutch-side release shaft 57A. The respective central axes of the third clutch-side release shaft 57C, the second clutch-side release shaft 57B, and the first clutch-side release shaft 57A are aligned on an identical straight line extending in the front-rear direction when viewed in the axial direction. The third clutch-side release shaft 57C is located inside the clutch cover 30, and is covered with the clutch cover 30. The third clutch-side release shaft 57C is formed in a cylindrical shape. A support shaft 80 is inserted into the inside of the third clutch-side release shaft 57C. The third clutch-side release shaft 57C is rotatably supported by the support shaft 80. The support shaft 80 is located inside the clutch cover 30. An upper end of the support shaft 80 is supported by the clutch cover 30.

The release mechanism 51 includes a gear train 81, which transmits the rotation of the second clutch-side release shaft 57B to the first clutch-side release shaft 57A. The gear train 81 is disposed inside the clutch cover 30. The gear train 81 includes: a front-stage gear 81a, which rotates integrally with the second clutch-side release shaft 57B; an intermediate gear 81b, which rotates integrally with the third clutch-side release shaft 57C; and a rear-stage gear 81c, which rotates integrally with the first clutch-side release shaft 57A. The front-stage gear 81a is formed integrally with the second clutch-side release shaft 57B. The front-stage gear 81a meshes with the intermediate gear 81b. The intermediate gear 81b is formed on an outer circumferential surface of the third clutch-side release shaft 57C. The intermediate gear 81b meshes with the rear-stage gear 81c. The rear-stage gear 81c is formed integrally with an upper end portion of the first clutch-side release shaft 57A. Accordingly, the plurality of clutch-side release shafts 57A to 57C of the clutch-side release shaft group 57 integrally rotate with one another.

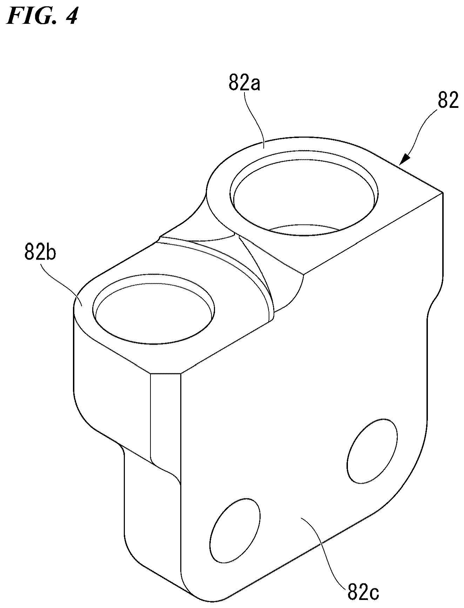

FIG. 4 is a perspective view illustrating a shaft holding member according to the first embodiment.

As illustrated in FIGS. 3 and 4, the second clutch-side release shaft 57B and the support shaft 80 are supported by a shaft holding member 82 in the inside of the clutch cover 30. The shaft holding member 82 includes: a first cylindrical portion 82a, which supports a lower end portion of the second clutch-side release shaft 57B; a second cylindrical portion 82b, which supports a lower end portion of the support shaft 80; and a fastening portion 82c, which is fastened to either the clutch cover 30 or the crankcase 22. The first cylindrical portion 82a and the second cylindrical portion 82b are aligned side by side in the front-rear direction to correspond to the positional relationship between the second clutch-side release shaft 57B and the support shaft 80 and are formed integrally with each other. The fastening portion 82c is formed integrally with the first cylindrical portion 82a and the second cylindrical portion 82b and extends downward from the first cylindrical portion 82a and the second cylindrical portion 82b. In the fastening portion 82c, through holes into which bolts are inserted, are formed side by side in the front-rear direction.

As illustrated in FIG. 3, the clutch actuator 60 controls actuation torque applied to the release shaft 53 and connects and disconnects the clutch device 40. The clutch actuator 60 is attached to an upper portion of the clutch cover 30. The clutch actuator 60 includes: a motor 61 as a drive source; a speed reduction mechanism 62, which transmits the driving force of the motor 61 to the release shaft 53; and the unit case 70, which accommodates the motor 61 and the speed reduction mechanism 62.

The motor 61 is, for example, a DC motor. The motor 61 is disposed so that the rotation axis of the rotor is along the axial direction of the release shaft 53. The motor 61 is disposed so that its rotation shaft 61a protrudes upward and downward. In one embodiment, the clutch actuator 60, which is a single constitution, includes a pair of motors 61. The pair of motors 61 are aligned in the front-rear direction. Control of the pair of motors 61 will be described later.

The speed reduction mechanism 62 decelerates the rotational power output from the motor 61 and transmits the rotational power to the release shaft 53. The speed reduction mechanism 62 includes a gear train 63. Each gear of the gear train 63 has a rotation axis along the axial direction. The gear train 63 includes: a driving gear 61b; a first reduction gear 64b; a first small-diameter gear 64c; a second reduction gear 65b; a second small-diameter gear 65c; a third reduction gear 66b; a third small-diameter gear 66c; and a driven gear 67.

The driving gear 61b is provided integrally with the rotation shaft 61a of each motor 61. The first reduction gear 64b is disposed between the two driving gears 61b. The first reduction gear 64b meshes with each driving gear 61b. The first reduction gear 64b decelerates the rotation of each driving gear 61b. The first small-diameter gear 64c is provided coaxially with the first reduction gear 64b. The second reduction gear 65b meshes with the first small-diameter gear 64c. The second reduction gear 65b decelerates the rotation of the first small-diameter gear 64c. The second small-diameter gear 65c is provided coaxially with the second reduction gear 65b. The third reduction gear 66b meshes with the second small-diameter gear 65c. The third reduction gear 66b decelerates the rotation of the second small-diameter gear 65c. The third small-diameter gear 66c is provided coaxially with the third reduction gear 66b. The driven gear 67 meshes with the second small-diameter gear 65c. The driven gear 67 decelerates the rotation of the second small-diameter gear 65c.

The first reduction gear 64b and the first small-diameter gear 64c are each provided to be integrally rotatable with a first support shaft 64a. The first reduction gear 64b, the first small-diameter gear 64c, and the first support shaft 64a constitute a first reduction shaft 64. The first reduction shaft 64 has a central axis along the axial direction.

The second reduction gear 65b and the second small-diameter gear 65c are each provided to be integrally rotatable with a second support shaft 65a. The second reduction gear 65b, the second small-diameter gear 65c, and the second support shaft 65a constitute a second reduction shaft 65. The second reduction shaft 65 has a central axis along the axial direction.

The third reduction gear 66b and the third small-diameter gear 66c overlap each other in the axial direction. The third reduction gear 66b and the third small-diameter gear 66c are integrally formed with each other. The third reduction gear 66b and the third small-diameter gear 66c are provided to be integrally rotatable with a third support shaft 66a. The third reduction gear 66b, the third small-diameter gear 66c, and the third support shaft 66a constitute a third reduction shaft 66. The third reduction shaft 66 has a central axis along the axial direction. The third reduction shaft 66 is provided with a rotation angle sensor 68, which detects a rotation angle of the third reduction shaft 66.

The third reduction shaft 66 is positioned on a front side of the second reduction shaft 65. The second reduction shaft 65 is positioned on a front side of the first reduction shaft 64. On a front side of the third reduction shaft 66, the control-side release shaft 56 is disposed. The central axis of the control-side release shaft 56 and the respective central axes of the reduction shafts 64, 65, and 66 are aligned on an identical straight line extending in the front-rear direction when viewed in the axial direction. That is, the central axes of the plurality of clutch-side release shafts 57A to 57C and the central axes of the respective reduction shafts 64, 65, and 66 are aligned on the identical straight line extending in the front-rear direction when viewed in the axial direction.

The first support shaft 64a, the second support shaft 65a, and the third support shaft 66a are each rotatably supported by the unit case 70. The third reduction gear 66b is a fan-shaped gear with the third support shaft 66a as its center. The third reduction gear 66b is provided to enlarge on the front side of the third support shaft 66a.

The driven gear 67 is provided to be integrally rotatable with the control-side release shaft 56. The driven gear 67 is a fan-shaped gear with the control-side release shaft 56 as its center. The driven gear 67 is provided to enlarge on the front side of the control-side release shaft 56. The third reduction gear 66b and the driven gear 67 are formed in the fan-shaped gears, thereby enabling downsizing of the speed reduction mechanism 62 and the clutch actuator 60. That is, also in a case where a large-diameter reduction gear is provided in order to gain a reduction ratio, a portion other than a mesh range of the reduction gear is cut out to form a fan shape, so that protruding outward in the vehicle width direction of the speed reduction mechanism 62 can be particularly suppressed, and the weight of the speed reduction mechanism 62 can be reduced.

A speed reduction mechanism 62 connects the motor 61 with the control-side release shaft 56 to be capable of interlocking all the time. In this manner, the clutch actuator 60 constitutes a system for directly connecting and disconnecting the clutch device 40.

The unit case 70 is fixed to the clutch cover 30. The unit case 70 includes the gear case 71 and a motor case 75.

The gear case 71 rotatably supports the first support shaft 64a, the second support shaft 65a, and the third support shaft 66a. The gear case 71 accommodates the gear train 63. The gear case 71 is formed in upper and lower two stages in the axial direction. Hereinafter, an upper portion of the gear case 71 will be referred to as an upper stage portion 71U, and a lower portion of the gear case 71 will be referred to as a lower stage portion 71L. The upper stage portion 71U is shifted rearward along a plane orthogonal to the axial direction with respect to the lower stage portion 71L. The motor case 75, which extends along the axial direction, is continuous below the lower stage portion 71L.

The upper stage portion 71U has a rectangular shape elongated in the front-rear direction, when viewed in the axial direction. The upper stage portion 71U forms an upper stage gear housing chamber 72U. The upper stage gear housing chamber 72U houses the first small-diameter gear 64c, the second reduction gear 65b, the second small-diameter gear 65c, the third reduction gear 66b, the third small-diameter gear 66c, and the driven gear 67 of the gear train 63. The upper stage portion 71U of the gear case 71 is vertically divided into two parts with a division plane orthogonal to the axial direction as a boundary. Hereinafter, a lower portion of the upper stage portion 71U will be referred to as an upper stage portion main body 71Ua, and an upper portion of the upper stage portion 71U will be referred to as a case upper cover 71Ub. The upper stage portion main body 71Ua is opened upward. The case upper cover 71Ub closes an upper opening of the upper stage portion main body 71Ua from above.

The lower stage portion 71L has an oval shape elongated in the front-rear direction, when viewed in the axial direction. The lower stage portion 71L forms a lower stage gear housing chamber 72L. The upper stage gear housing chamber 72U and the lower stage gear housing chamber 72L are partitioned by a partition wall. The lower stage gear housing chamber 72L houses the driving gear 61b and the first reduction gear 64b of the rotation shaft 61a of each motor 61 in the gear train 63. The lower stage portion 71L of the gear case 71 is vertically divided into two parts with a division plane orthogonal to the axial direction as a boundary. Hereinafter, an upper part of the lower stage portion 71L will be referred to as a lower stage portion main body 71La, and a lower part of the lower stage portion 71L will be referred to as a case lower cover 71Lb. The lower stage portion main body 71La is opened downward. The case lower cover 71Lb closes a lower portion of the lower stage portion main body 71La from below.

The motor case 75 forms a motor housing chamber 76, which houses the two motors 61. The motor housing chamber 76 houses two motors 61 each having a cylindrical shape to be aligned in parallel with each other. The motor case 75 has a bottomed cylindrical and oval shape in cross-section. A case lower cover 71Lb is integrally formed on an upper portion of the motor case 75 to enlarge its cross-sectional shape. The motor case 75 and the case lower cover 71Lb are integrally formed with each other to constitute a lower case body 77L.

The upper stage portion main body 71Ua and the lower stage portion main body 71La are integrally formed with each other to constitute an upper case body 77U. The case upper cover 71Ub is attached to the upper case body 77U from above, and the upper stage gear housing chamber 72U is formed between the upper case body 77U and the case upper cover 71Ub. The case lower cover 71Lb of the lower case body 77L is attached to the upper case body 77U from below, and the lower stage gear housing chamber 72L is formed between the upper case body 77U and the case lower cover 71Lb. The lower case body 77L and the upper case body 77U are positioned with each other via a pair of front and rear knock pins 79. A lower portion of each of the knock pins 79 is fitted into a holding hole of the lower case body 77L. An upper portion of each of the knock pins 79 is inserted into a fitting hole of the upper case body 77U.

An opening portion 73a, into which the second clutch-side release shaft 57B is inserted, is formed in the gear case 71. The opening portion 73a faces the shaft insertion portion 36 of the clutch cover 30. The opening portion 73a penetrates through the upper stage portion main body 71Ua in the axial direction. The gear case 71 receives the second clutch-side release shaft 57B, which protrudes from the clutch cover 30, through the opening portion 73a. The gear case 71 holds, in its inside, the control-side release shaft 56 to be rotatable.

When the clutch actuator 60 is attached to the clutch cover 30, the control-side release shaft 56 and the second clutch-side release shaft 57B are linearly coupled to each other.

### <Transmission System>

Here, regarding the motorcycle 1, the driver performs only the shift operation of the transmission 25 (foot operation on a shift pedal), and the connection and disconnection operation of the clutch device 40 is automatically performed with electric control in accordance with the operation on the shift pedal. That is, a so-called semi-automatic transmission system 100 (an automatic clutch transmission system) is employed for the motorcycle 1.

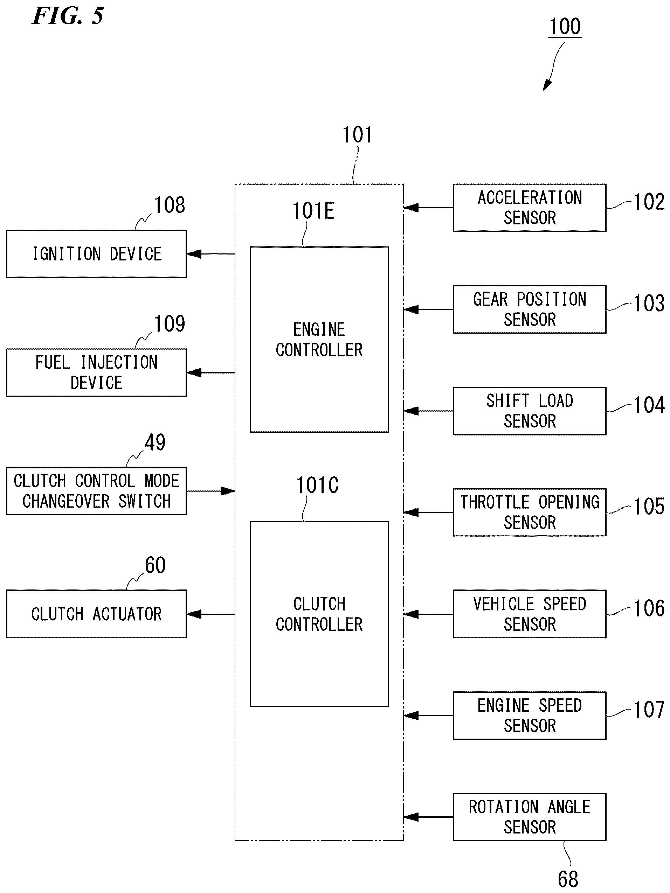

FIG. 5 is a block diagram of the transmission system according to the first embodiment.

As illustrated in FIG. 5, the transmission system 100 of the motorcycle 1 mainly includes a controller 101, an acceleration sensor 102, a gear position sensor 103, a shift load sensor 104, a throttle opening sensor 105, a vehicle speed sensor 106, an engine speed sensor 107, an ignition device 108, and a fuel injection device 109, in addition to the clutch actuator 60.

The controller 101 controls the actuation of the ignition device 108 and the fuel injection device 109, and also controls the actuation of the clutch actuator 60. The control by the controller 101 is conducted, based on detection information from the acceleration sensor 102, the gear position sensor 103, and the shift load sensor 104 (for example, a torque sensor), and various types of vehicle state detection information from the throttle opening sensor 105, the vehicle speed sensor 106, the engine speed sensor 107, and the like.

The acceleration sensor 102 detects a behavior of a vehicle body. The gear position sensor 103 detects a gear position from the rotation angle of the shift drum 29b. The shift load sensor 104 detects operation torque that has been input into a shift spindle 29a (see FIG. 2) of the change mechanism 29. The throttle opening sensor 105 detects a throttle opening. The vehicle speed sensor 106 detects a vehicle speed. The engine speed sensor 107 detects a rotation speed of the engine.

The controller 101 includes a clutch controller 101C and an engine controller 101E, which are independent of each other. The clutch controller 101C mainly controls the driving of the clutch actuator 60. The engine controller 101E mainly controls the driving of the engine 21. The clutch controller 101C and the engine controller 101E are constituted as, for example, electronic control units (ECUs) that are separate from each other. The clutch controller 101C and the engine controller 101E may be constituted in an integrated ECU as long as they conduct control independently of each other. The clutch controller 101C and the engine controller 101E perform the control in coordination with each other in both cases where they are constituted separately from each other and where they are constituted integrally with each other.

The clutch controller 101C process an electric current value to be supplied to the motor 61 in order to connect and disconnect the clutch device 40, based on a preset processing program. The electric current supplied to the motor 61 is obtained from a correlation with torque output from the motor 61. The target torque of the motor 61 is proportional to actuation torque (driven clutch lever torque to be described later) applied to the release shaft 53. The electric current value supplied to the motor 61 is detected by an electric current sensor included in the clutch controller 101C. The actuation of the clutch actuator 60 is controlled in accordance with a change in detection value of the electric current sensor.

### <Clutch Control Mode>

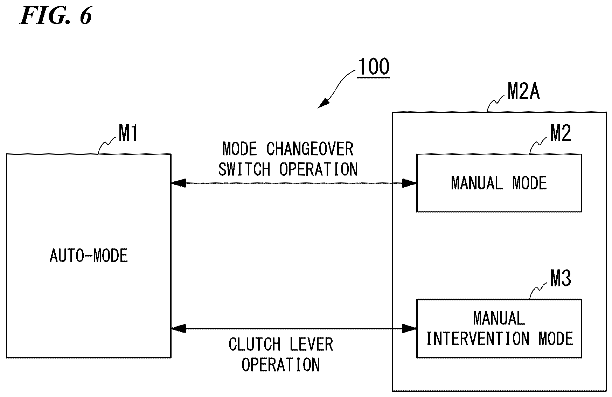

FIG. 6 is an explanatory diagram illustrating transition of a clutch control mode of the motorcycle according to the first embodiment.

As illustrated in FIG. 6, the transmission system 100 according to the present embodiment has three types of clutch control modes. The clutch control mode includes: an auto-mode M1 in which automatic control is performed; a manual mode M2 in which manual operation is performed; and a manual intervention mode M3 in which a temporary manual operation is performed. The clutch control mode appropriately transitions among the above three types of modes in accordance with the operation on a clutch control mode changeover switch 49 (see FIG. 5) and an operation on the clutch operation element. Note that a system including the manual mode M2 and the manual intervention mode M3 will be referred to as a manual system M2A.

The auto-mode M1 is a mode of controlling the clutch device 40, by processing a clutch capacity suitable for a traveling state in accordance with automatic start and shift control. The manual mode M2 is a mode of controlling the clutch device 40, by processing the clutch capacity in accordance with a clutch operation instruction from an occupant. The manual intervention mode M3 is a mode of controlling the clutch device 40, by receiving a clutch operation instruction from the occupant during the auto-mode M1, and processing the clutch capacity from the clutch operation instruction, and is a temporary manual operation mode. Note that in the manual intervention mode M3, for example, when a state in which the occupant stops operating the clutch operation element (a completely released state) continues for a prescribed period of time, the mode may be set to return to the auto-mode M1.

For example, at the time of activating the system, the transmission system 100 starts control from a clutch-on state (a connected state) in the auto-mode M1. In addition, the transmission system 100 is set to return to the clutch-on state in the auto-mode M1, when the engine 21 is stopped (when the system is turned off). In the clutch device 40, which is a normally closed clutch, the supply of electric power to the motor 61 of the clutch actuator 60 is not necessary, when the clutch is turned on. On the other hand, in a clutch-off state (a disconnected state) of the clutch device 40, the supply of electric power to the motor 61 is maintained.

In the auto-mode M1, the clutch control is basically conducted automatically. In the auto-mode M1, the motorcycle 1 is enabled to travel without a lever operation. In the auto-mode M1, the clutch capacity is controlled, based on the throttle opening, the engine speed, the vehicle speed, the shift sensor output, and the like. This enables the motorcycle 1 to start only with a throttle operation without an engine stall. In addition, it becomes possible to change the gear ratio of the motorcycle 1 only with a shift operation. Further, in the auto-mode M1, the mode is switched to the manual intervention mode M3, when the occupant grips the clutch lever.

In the manual mode M2, it is possible to control the clutch capacity with a lever operation by the occupant. That is, in the manual mode M2, it is possible to disconnect the clutch device 40 with the lever operation by the occupant. The auto-mode M1 and the manual mode M2 are mutually switchable. Such mode switching is conducted, for example, by operating the clutch control mode changeover switch 49 (see FIG. 5) while the motorcycle 1 is stopped and the transmission 25 is in neutral. Note that the transmission system 100 may include an indicator indicating a manual state at the time of transitioning to the manual system M2A (the manual mode M2 or the manual intervention mode M3).

In the manual mode M2, the clutch control is basically conducted manually. In the manual mode M2, the clutch capacity is controllable in accordance with an actuation angle of the clutch lever (that is, an actuation angle of the driven clutch lever 58). This enables control of connection and disconnection of the clutch device 40 in accordance with an intention of the occupant. Hereinafter, the actuation angle of the driven clutch lever 58 will be referred to as a driven clutch lever actuation angle.

In the auto-mode M1, the clutch actuator 60 automatically connects and disconnects the clutch device 40. In the auto-mode M1, by performing the manual clutch operation on the clutch lever, it becomes possible to temporarily intervene the manual operation in the automatic control of the clutch device 40 (the manual intervention mode M3).

### <Manual Clutch Operation>

As illustrated in FIG. 2, the clutch lever is coupled through an operation cable to the driven clutch lever 58, which is attached to the release shaft 53 of the clutch device 40. The driven clutch lever 58 is integrally and rotatably attached to an upper end portion of the release shaft 53.

In addition, for example, the clutch control mode changeover switch 49 is provided on a handlebar switch attached to a steering handlebar. This enables the occupant to easily switch the clutch control mode during normal driving.

### <2 Motor Control>

In one embodiment, the pair of motors 61 in the clutch actuator 60 may be constituted to cooperate with each other to drive the release shaft 53 (to connect and disconnect the clutch device 40). In this case, the weight (load) shared by each of the two motors 61 is halved, so that each motor 61 can be downsized. This increases the degree of freedom in the layout of the motors 61, as compared with a constitution in which the clutch actuator 60 includes a single motor 61. Therefore, also in a case where the clutch actuator 60 is disposed on an outside portion of the power unit 20, a protrusion to the outside in the vehicle width direction of the clutch actuator 60 is easily suppressed. Therefore, it becomes possible to substantially downsize the clutch actuator 60.

In one embodiment, in the clutch actuator 60, during normal time (at the time of non-failure), one of the plurality of (two) motors 61 may be used as a drive source of the release shaft 53, and the remaining one may be used for another purpose. For example, the remaining one motor 61 may be constituted not to be actuated for fail-safe, or may be used as an electric current sensor.

As described heretofore, the clutch control device 50 according to the present embodiment includes the release mechanism 51, which receives the input from at least one of the clutch actuator 60 and the clutch lever and then actuates the clutch device 40. The release mechanism 51 includes: the control-side release shaft 56, which is supported by the clutch actuator 60 and which receives the input from the motor 61, and then rotates; the clutch-side release shaft group 57, which includes the plurality of clutch-side release shafts 57A to 57C for receiving the rotation of the control-side release shaft 56 to rotate integrally, and which is detachably engaged with the control-side release shaft 56; and the lifter shaft 52, which extends in the axial direction, which is engaged with the first clutch-side release shaft 57A, and which is displaced in the axial direction by the rotation of the clutch-side release shaft group 57 to actuate the clutch device 40. The plurality of clutch-side release shafts 57A to 57C are disposed with their central axes shifted from one another. According to this constitution, by adjusting the arrangement of the clutch-side release shaft group 57 including the second clutch-side release shaft 57B, which is engaged with the control-side release shaft 56, it becomes possible to optionally set the position of the clutch actuator 60 including the control-side release shaft 56 with respect to the lifter shaft 52. Therefore, the degree of freedom in the arrangement of the clutch actuator 60 can be improved. In particular, the position of the motor 61 having a large thickness in the vehicle width direction is adjustable, so that a peripheral portion of the motor 61 in the clutch actuator being hit on the driver's leg can be suppressed.

The release mechanism 51 includes the manual-side release shaft 55, which is detachably engaged with the clutch-side release shaft group 57, and which receives the force of the operation by the driver, and then rotates. The plurality of clutch-side release shafts 57A to 57C individually receive the rotation of the manual-side release shaft 55 and the rotation of the control-side release shaft 56 and then rotate integrally. The manual-side release shaft 55 is disposed to be coaxial with the first clutch-side release shaft 57A and is directly engaged with the first clutch-side release shaft 57A. According to this constitution, the manual-side release shaft 55 is directly coupled with the first clutch-side release shaft 57A without the intervention of a gear or the like, and thus the driver is able to rotate the manual-side release shaft 55 with a direct operation feeling when actuating the clutch device 40. Therefore, the operability of the manual connection and disconnection operation of the clutch device 40 can be improved.

The clutch-side release shaft group 57 further includes: the second clutch-side release shaft 57B, which is engaged with the control-side release shaft 56; and the third clutch-side release shaft 57C, which transmits the rotation of the second clutch-side release shaft 57B to the first clutch-side release shaft 57A. According to this constitution, it becomes possible to dispose the clutch actuator 60 including the control-side release shaft 56 at a position further apart from the lifter shaft 52, as compared with a constitution in which the clutch-side release shaft group includes only two clutch-side release shafts. Therefore, the degree of freedom in the arrangement of the clutch actuator 60 can be further improved.

The shaft holding member 82, which is disposed outside the clutch actuator 60, and which holds the second clutch-side release shaft 57B; and the clutch cover 30, which covers the first clutch-side release shaft 57A, are provided. According to this constitution, since the clutch cover 30 is disposed integrally with the clutch-side release shaft group 57 outside the clutch actuator 60, the shaft holding member 82 is also covered with the clutch cover 30, which covers the first clutch-side release shaft 57A. This enables the shaft holding member 82 to be collectively sealed together with the first clutch-side release shaft 57A, thereby eliminating the need for an oil seal structure, so that an increase in the number of components can be minimized.

Note that the power unit 20 in one embodiment can be constituted by replacing the clutch cover 30 and the release shaft 53 in a manual clutch type of power unit in which the connection and disconnection operation of the clutch device 40 is not performed with the electric control but is performed by an operation of the driver, and installing the clutch actuator 60 later. Therefore, the clutch actuator 60 is attachable to a power unit of a different model. Therefore, it becomes possible to easily constitute a semi-automatic transmission system 100 (an automatic clutch transmission system) by commonly using the clutch actuator 60 for lots of models.

### (Second Embodiment)

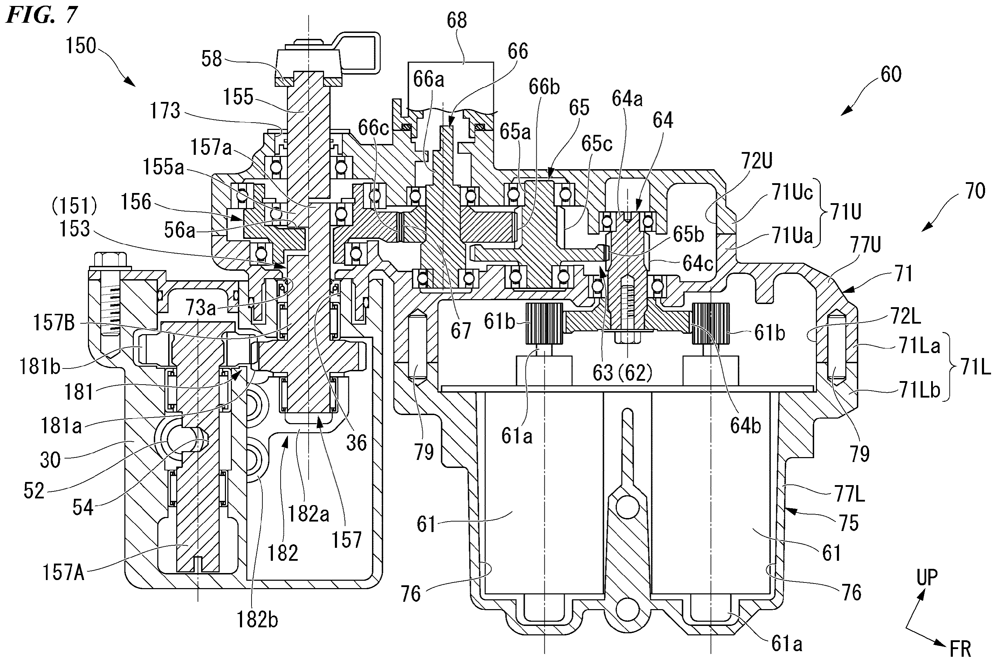

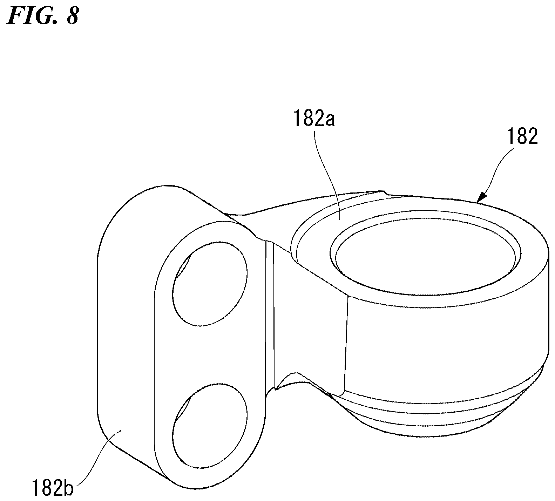

Next, the second embodiment will be described with reference to FIGS. 7 and 8. A clutch control device 150 according to the second embodiment includes a release shaft 153, in place of the release shaft 53 according to the first embodiment. Note that constitutions other than those to be described below are similar to those according to the first embodiment.

FIG. 7 is a cross-sectional view illustrating a clutch control device according to the second embodiment.

As illustrated in FIG. 7, a release mechanism 151 includes the release shaft 153. The release shaft 153 includes: a manual-side release shaft 155, which receives a force of the operation by the driver, and then rotates; a control-side release shaft 156, which receives an input from the clutch actuator 60, and then rotates; and a clutch-side release shaft group 157 including a plurality of clutch-side release shafts 157A and 157B, which individually receive rotation of the manual-side release shaft 155 and rotation of the control-side release shaft 156, and then rotate integrally.

The manual-side release shaft 155 has a cylindrical shape. A lower portion of the manual-side release shaft 155 is located inside the unit case 70 of the clutch actuator 60. The manual-side release shaft 155 is rotatably supported by the unit case 70. An upper end portion of the manual-side release shaft 155 protrudes outward from the unit case 70. A driven clutch lever 58 is integrally and rotatably supported on an upper end portion of the manual-side release shaft 155.

The clutch-side release shaft group 157 includes the plurality of clutch-side release shafts 157A and 157B, which are disposed to be rotatable with respect to the clutch cover 30. The plurality of clutch-side release shafts 157A and 157B include a first clutch-side release shaft 157A and a second clutch-side release shaft 157B.

The first clutch-side release shaft 157A has a cylindrical shape. The first clutch-side release shaft 157A is located inside the clutch cover 30 and is covered with the clutch cover 30. The first clutch-side release shaft 157A is rotatably supported by the clutch cover 30. An eccentric cam portion 54 is formed in a lower portion of the first clutch-side release shaft 157A.

The second clutch-side release shaft 157B is disposed in parallel with the first clutch-side release shaft 157A with its central axis shifted. The second clutch-side release shaft 157B is disposed on a front side relative to the first clutch-side release shaft 157A. The second clutch-side release shaft 157B is disposed to be coaxial with the manual-side release shaft 155. A lower portion of the second clutch-side release shaft 157B is located inside the clutch cover 30 and is covered with the clutch cover 30. The second clutch-side release shaft 157B is rotatably supported by the clutch cover 30. An upper portion of the second clutch-side release shaft 157B protrudes outward from the clutch cover 30 through the shaft insertion portion 36 of the clutch cover 30. The upper portion of the second clutch-side release shaft 157B faces the inside of the gear case 71 of the clutch actuator 60.

A manual-side engaged portion 155a, which extends in the axial direction, is provided in a lower end portion of the manual-side release shaft 155. An engaging portion 157a, which extends in the axial direction, is provided at an upper end portion of the second clutch-side release shaft 157B. The manual-side engaged portion 155a and the engaging portion 157a are each formed in a fan shape in cross-section. The manual-side engaged portion 155a and the engaging portion 157a overlap each other in the axial direction, and face each other in the circumferential direction. The second clutch-side release shaft 157B and the manual-side release shaft 155 are engaged with each other to be integrally rotatable. That is, the second clutch-side release shaft 157B receives the rotation of the manual-side release shaft 155 and then rotates. In addition, when there is an input into the second clutch-side release shaft 157B without the intervention of the manual-side release shaft 155, the second clutch-side release shaft 157B is capable of rotating independently within a predetermined range from the manual-side release shaft 155.

The control-side release shaft 156 is formed in a similar manner to the control-side release shaft 56 according to the first embodiment. The control-side release shaft 156 is insertable into an engagement portion between the lower end portion of the manual-side release shaft 155 and the upper end portion of the second clutch-side release shaft 157B. The control-side engaged portion 56a of the control-side release shaft 156 is formed in a fan shape in cross-section.

The control-side engaged portion 56a of the control-side release shaft 156 and the engaging portion 157a of the second clutch-side release shaft 157B overlap each other in the axial direction and face each other in the circumferential direction. Accordingly, the second clutch-side release shaft 157B receives the rotation of the control-side release shaft 156 and then rotates. In addition, the engaging portion 157a is spaced apart from the control-side engaged portion 56a in the circumferential direction. When there is an input into the second clutch-side release shaft 157B without the intervention of the control-side release shaft 156, the second clutch-side release shaft 157B is capable of rotating independently within a predetermined range from the control-side release shaft 156.

The release mechanism 51 includes a gear train 181, which transmits the rotation of the second clutch-side release shaft 157B to the first clutch-side release shaft 157A. The gear train 181 is disposed inside the clutch cover 30. The gear train 181 includes: a front-stage gear 181a, which rotates integrally with the second clutch-side release shaft 157B; and a rear-stage gear 181b, which rotates integrally with the first clutch-side release shaft 157A. The front-stage gear 181a is formed integrally with the second clutch-side release shaft 157B. The rear-stage gear 181b meshes with the front-stage gear 181a. Accordingly, the plurality of clutch-side release shafts 157A and 157B of the clutch-side release shaft group 157 rotate integrally. In the present embodiment, the gear train 181 decelerates the rotation of the manual-side release shaft 155 and transmits the rotation to the first clutch-side release shaft 157A.

FIG. 8 is a perspective view illustrating a shaft holding member according to the second embodiment.

As illustrated in FIGS. 7 and 8, the second clutch-side release shaft 157B is supported by a shaft holding member 182 in the inside of the clutch cover 30. The shaft holding member 182 includes: a cylindrical portion 182a, which supports the lower end portion of the second clutch-side release shaft 157B; and a fastening portion 182b, which is fastened to either the clutch cover 30 or the crankcase 22. The fastening portion 182b is formed integrally with the cylindrical portion 182a and extends rearward from the cylindrical portion 182a. In the fastening portion 182b, through holes into which bolts are inserted, are formed side by side in the up-down direction.

The unit case 70 of the clutch actuator 60 includes a case upper cover 71Uc, in place of the case upper cover 71Ub according to the first embodiment. An opening portion 173, into which the manual-side release shaft 155 is inserted, is formed in the case upper cover 71Uc. The opening portion 173 penetrates the case upper cover 71Uc in the axial direction. An inner circumferential surface of the opening portion 173 holds the manual-side release shaft 155 to be rotatable, in a state in which the manual-side release shaft 155 protrudes to the outside of the gear case 71 through the opening portion 173.

When the clutch actuator is attached to the clutch cover 30, the manual-side release shaft 155, the control-side release shaft 156, and the second clutch-side release shaft 157B are linearly coupled to each other.

As described heretofore, according to the clutch control device 150 in the present embodiment, operation and effects similar to those in the first embodiment are obtained. In addition, in the present embodiment, the release mechanism 151 includes the gear train 181, which decelerates the rotation of the manual-side release shaft 155, and which transmits the rotation to the first clutch-side release shaft 157A. According to this constitution, when actuating the clutch device 40, an operation load applied by the driver to the manual-side release shaft 155 can be reduced.

Noted that in the first embodiment and the second embodiment, the clutch actuator 60 is substantially commonly used, including the control-side release shafts 56 and 156. Therefore, it becomes possible to form a clutch device by interposing the release shaft group between the clutch actuator 60 and the first clutch-side release shaft 57A or 157A, which is provided on the vehicle body side, or by directly connecting the clutch actuator 60 with the release shaft on the vehicle body side, so that the clutch actuator 60 can be commonly used by a plurality of vehicle types.

The release mechanism 51 according to the embodiments is an eccentric cam mechanism, but the release mechanism 51 may be a mechanism including a rack and pinion, a feed screw, or the like. The mechanism for coupling the clutch lever and the driven clutch lever 58 is not limited to the operation cable, and may be a mechanism including a rod, a link, or the like.

In the embodiments, the release mechanism is constituted to receive the input of the clutch operation element, and is then actuated, but is not limited to this constitution. That is, the release mechanism may be constituted to be actuated only by receiving the input of the clutch actuator. In addition, the clutch actuator 60 in the embodiments includes the pair of motors 61, but the clutch actuator may include only one motor.

In the embodiments, the clutch-side release shaft group is constituted to include two or three shafts, but the present invention is not limited to this constitution. The clutch-side release shaft group may include four or more shafts.

Additionally, it is possible to appropriately replace a constituent element in the above-described embodiments with a known constituent element without departing from the gist of the present invention.

### INDUSTRIAL APPLICABILITY

According to the above clutch control device, the degree of freedom in the arrangement of the clutch actuator can be improved.

### REFERENCE SIGNS LIST

30 Clutch cover (shaft cover portion)
40 Clutch device
50, 150 Clutch control device
51, 151 Release mechanism
52 Lifter shaft
53, 153 Release shaft
55, 155 Manual-side release shaft
56, 156 Control-side release shaft
57, 157 Clutch-side release shaft group
57A, 157A First clutch-side release shaft (clutch-side release shaft)
57B, 157B Second clutch-side release shaft (clutch-side release shaft)
57C Third clutch-side release shaft (clutch-side release shaft)
60 Clutch actuator
61 Motor
82, 182 Shaft holding member
181 Gear train (reduction gear train)

## Claims

1. A clutch control device comprising:
a clutch actuator (60) including a motor (61) which outputs driving force for actuating a clutch device (40);
a clutch operation element on which a clutch operation is performed by an occupant; and
a release mechanism (51, 151) which receives an input from at least one of the clutch actuator (60) and the clutch operation element, and then actuates the clutch device (40), wherein
the release mechanism (51, 151) includes:
a control-side release shaft (56) which is supported by the clutch actuator (60), and which receives an input from the motor (61), and then rotates;
a clutch-side release shaft group (57, 157) including a plurality of clutch-side release shafts (57A, 57B, 57C, 157A, 157B) which receive rotation of the control-side release shaft (56), and then rotate integrally, the clutch-side release shaft group (57, 157) being detachably engaged with the control-side release shaft (56); and
a lifter shaft (52) which extends in an axial direction, which is engaged with a first clutch-side release shaft (57A, 157A) of the plurality of clutch-side release shafts (57A, 57B, 57C, 157A, 157B), and which is displaced in the axial direction by rotation of the clutch-side release shaft group (57, 157) to actuate the clutch device (40), and
the plurality of clutch-side release shafts (57A, 57B, 57C, 157A, 157B) are disposed with central axes shifted from each other.

2. The clutch control device according to claim 1, wherein
the release mechanism (151) includes a manual-side release shaft (155) which is detachably engaged with the clutch-side release shaft group (157), and which receives a force of the operation by a driver, and then rotates,
the plurality of clutch-side release shafts (157A, 157B) individually receive rotation of the manual-side release shaft (155) and rotation of the control-side release shaft (156), and then rotate integrally, and
the release mechanism (151) includes a reduction gear train (181) which decelerates the rotation of the manual-side release shaft (155) and transmits the rotation to the first clutch-side release shaft (157A).

3. The clutch control device according to claim 1, wherein
the release mechanism (51) includes a manual-side release shaft (55) which is detachably engaged with the clutch-side release shaft group (57) and receives a force of the operation by a driver, and then rotates,
the plurality of clutch-side release shafts (57A, 57B, 57C) individually receive rotation of the manual-side release shaft (55) and rotation of the control-side release shaft (56), and then rotate integrally, and
the manual-side release shaft (55) is disposed to be coaxial with the first clutch-side release shaft (57A) and is directly engaged with the first clutch-side release shaft (57A).

4. The clutch control device according to claim 1 or 2, wherein
the clutch-side release shaft group (57) further includes:
a second clutch-side release shaft (57B) which is engaged with the control-side release shaft (56); and
a third clutch-side release shaft (57C) which transmits rotation of the second clutch-side release shaft (57B) to the first clutch-side release shaft (57A).

5. The clutch control device according to claim 1 or 2, further comprising:
a shaft holding member (82, 182) which is disposed outside the clutch actuator (60), and which holds at least one clutch-side release shaft other than the first clutch-side release shaft (57A, 157A) in the clutch-side release shaft group (57, 157); and
a shaft cover portion (30) which covers the first clutch-side release shaft (57A, 157A).
